# EUROPÄISCHE PATENTANMELDUNG

(11) **EP 2 256 365 A2**
(43) Veröffentlichungstag der Anmeldung: **01.12.2010**
(21) Anmeldenummer: 10163738.7
(22) Anmeldetag: 25.05.2010
(51) Int. Cl.: F16F 9/38

(54) **Zylinderanordnung**

(30) Priorität: 27.05.2009 DE 202009007569 U
(71) Anmelder: AL-KO Kober AG, 89359 Kötz (DE)
(72) Erfinder: Gallego Gustavo, 48200 Durango (ES); Friess Gerhard, 48220 Amorebieta (ES)
(74) Vertreter: Ernicke, Hans-Dieter

(57) **Zusammenfassung**

Die Erfindung betrifft eine Zylinderanordnung, insbesondere Stoßdämpfer, mit einer Kolbenstange (4), einem Schutzrohr (5) und einem damit verbundenen Schutzdeckel (6). Der Schutzdeckel (6) ist direkt am Mantel der Kolbenstange (4) befestigt. Der Schutzdeckel (6) kann mittels einer Klemmverbindung (8) am Mantel der Kolbenstange (4) befestigbar sein, wobei der Schutzdeckel (6) und die Kolbenstange (4) formschlüssig ineinander greifende Verbindungselemente (9,18) aufweisen.

## Beschreibung

Die Erfindung betrifft eine Zylinderanordnung, insbesondere einen Stoßdämpfer, mit den Merkmalen im Oberbegriff des Hauptanspruchs.

Ein solcher teleskopierbarer Stoßdämpfer ist aus der Praxis bekannt. Er weist einen Zylinder mit einer Kolbenstange und einem den Zylinder umgebenden Schutzrohr auf, welches an der Oberseite mit einem Schutzdeckel verbunden ist. Der Schutzdeckel ist an einem Lagerauge des Zylinders angeschweißt. Der Schutzdeckel und das Schutzrohr bestehen aus Metall. Derartige Stoßdämpfer sind bau- und montageaufwändig.

Es ist Aufgabe der vorliegenden Erfindung, eine bessere Stoßdämpferanordnung aufzuzeigen.

Die Erfindung löst diese Aufgabe mit den Merkmalen im Hauptanspruch.

Die Befestigung des Schutzdeckels der Schutzanordnung direkt an der Kolbenstange hat verschiedene Vorteile und verringert insbesondere den Bau- und Montageaufwand. Der Schutzdeckel kann direkt am Mantel der Kolbenstange befestigt werden, was eine Anbringung an einer vom Lagerauge distanzierten Stelle der Kolbenstange ermöglicht. Außerdem ist eine nachträgliche Deckelmontage nach der Herstellung des Zylinders möglich.

Der Kolbenstangenbereich oberhalb der Befestigungsstelle kann lackiert oder in anderer Weise mit einer schützenden Oberflächenbeschichtung versehen sein, die auch am Lagerauge angebracht sein kann. Der Bereich unterhalb der Befestigungsstelle kann lackfrei sein und kann eine für die Zylinder- und Kolbenstangenfunktion vorteilhafte

Ausbildung haben. Er kann insbesondere verchromt sein.

Eine Klemmverbindung des Schutzdeckels am Mantel der Kolbenstange hat den Vorteil, dass ein Wärmeeintrag und eine Verzugbildung, wie sie z.B. beim Schweiß- und Lötverbindung auftreten, vermieden werden können. Der Schutzdeckel kann genau so wie das Schutzrohr aus Kunststoff bestehen, was hinsichtlich der Kosten und des Korrosionsschutzes günstig ist. Zwischen dem Schutzdeckel und dem Schutzrohr kann ebenfalls eine Klemmverbindung bestehen.

Der scheibenförmige Schutzdeckel kann geteilt ausgebildet sein, wobei die zwei oder mehr Deckelteile unter Bildung einer seitlichen Zugangsöffnung für die Kolbenstange voneinander distanzierbar sind, was eine besonders einfache, schnelle, kostengünstige und vor allem auch nachträgliche Montage an der Kolbenstange ermöglicht. Ferner kann hierdurch die Schutzanordnung an bestehenden Zylindern nachgerüstet werden. Die Deckelteile können miteinander über eine Rastverbindung verbunden werden. Sie können außerdem an anderer Stelle, insbesondere an einem Ende über einen verformbaren oder beweglichen Verbindungssteg oder dergleichen noch zusammenhängen, was eine kosten- und handhabungsgünstige einstückige Herstellung ermöglicht. Der geschlossene Deckel kann zusätzlich noch über eine randseitige Einspannung am oberen Rand des Schutzrohres gesichert werden. Diese Sicherung kann sowohl den Deckel in seiner Schließstellung, als auch die Klemmverbindung zwischen Schutzdeckel und Kolbenstange sichern.

Die Klemmverbindung zwischen dem Schutzdeckel und der Kolbenstange kann unterschiedlich ausgeführt sein. Vorzugsweise ist die Nut am Kolbenstangenmantel angeordnet und kann mehreren Zwecken dienen. Sie kann außer zur Deckelbefestigung auch zur Kennlinienkontrolle des Zylinder und zum definierten Festhalten und Bewegen der Kolbenstange benutzt werden. Der Bauaufwand und die Bearbeitung der Kolbenstange werden minimiert.

Insgesamt ergibt sich für die Stoßdämpferanordnung eine deutliche Reduzierung der Herstell- und Montagekosten. Der erfindungsgemäße Schutzdeckel ist als Kunststoffteil kostengünstiger als die bisherigen Metalldeckel und lässt sich auch mit deutlich weniger Aufwand montieren. Trotz Einsatz von Klemm- und Rastverbindungen ergibt sich im Endzustand eine sichere und belastbare Verbindung zwischen Kolbenstange, Schutzdeckel und Schutzrohr.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1:: Einen Stoßdämpfer mit einer Schutzanordnung ist perspektivischer Ansicht,
- Figur 2:: eine Seitenansicht des Stoßdämpfers von Figur 1,
- Figur 3:: einen Schnitt durch den oberen Stoßdämpferbereich gemäß Schnittlinie III- III von Figur 2,
- Figur 4:: einen vergrößerten Ausschnitt der Verbindungsstelle zwischen einem Schutzdeckel und der Kolbenstange von Figur 3,
- Figur 5:: einen Schutzdeckel in geöffneter Stellung in perspektivischer Ansicht und
- Figur 6 und 7:: den Schutzdeckel von Figur 5 in Seitenansicht und Draufsicht.

Die Erfindung betrifft eine Zylinderanordnung (1) mit einer Schutzanordnung (2), welche z.B. ein Schutzrohr (5) und einen Schutzdeckel (6) aufweist. Die Erfindung betrifft auch den Schutzdeckel (6) an sich. Sie betrifft außerdem ein Verfahren zum Anbringen einer Schutzanordnung (2) an einer Zylinderanordnung (1).

Die Zylinderanordnung (1) kann in unterschiedlicher Weise ausgebildet und eingesetzt werden. Im gezeigten Ausführungsbeispiel handelt es sich um einen teleskopierbaren Stoßdämpfer. Die Zylinderanordnung (1) weist einen Zylinder (3) auf, der ein Gehäuse mit ein oder mehreren Zylinderrohren besitzen kann. Im Zylinder (3) ist eine Kolbenstange (4) mit einem Kolben (nicht dargestellt) längsbeweglich angeordnet und ragt an einem Ende aus dem Zylinder (3). Die Kolbenstange (4) trägt am freien äußeren Ende ein Anbindungselement (7), z.B. ein Lagerauge. Das Lagerauge (7) kann am freien Stangenende mittels einer Schweißverbindung oder dergleichen befestigt sein. Der Zylinder (3) kann am gegenüberliegenden Ende ebenfalls ein Anbindungselement (7), z.B. ein Lagerauge, aufweisen.

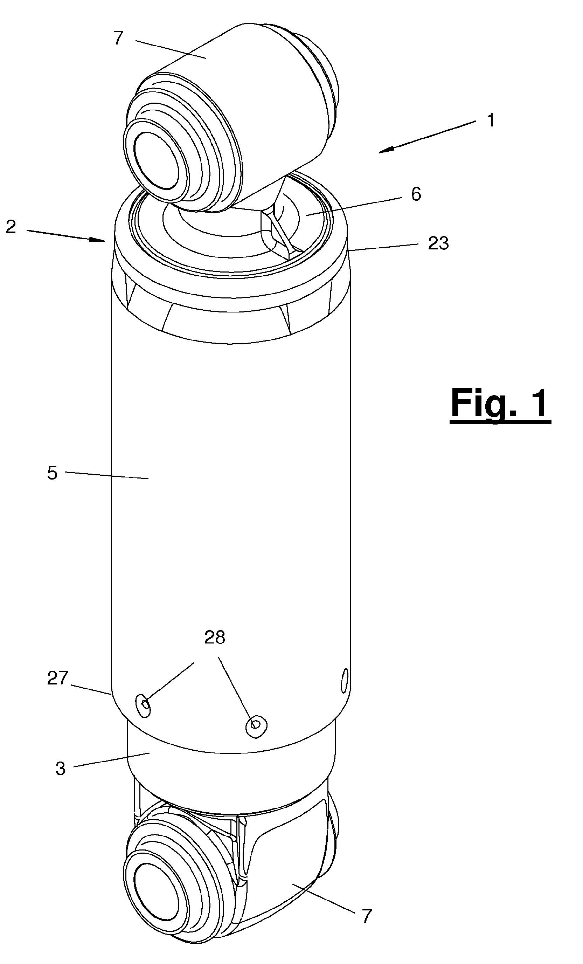

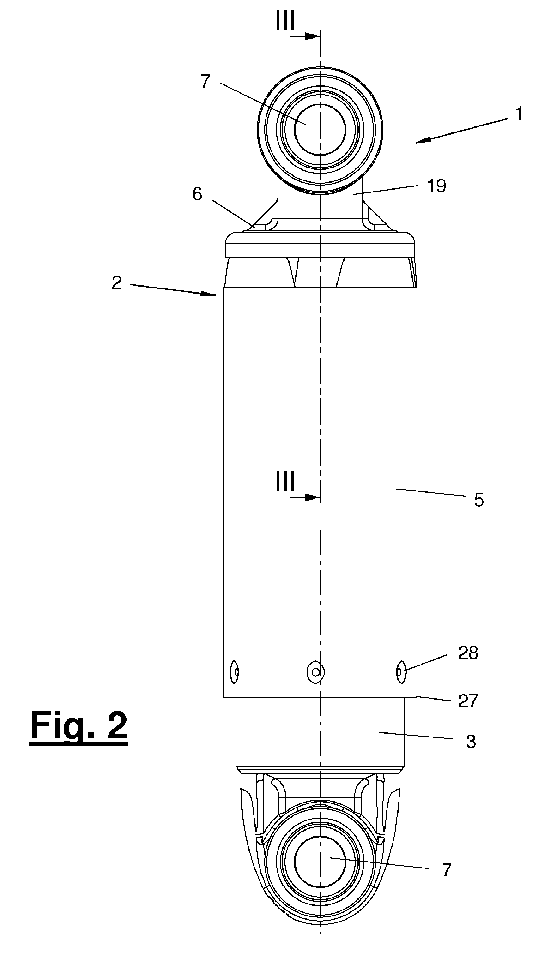

Figur 1 bis 3 zeigen diese Ausgestaltung.

Die Schutzanordnung (2) ist mit der Kolbenstange (4) verbunden und umgibt diese schützend in den verschiedenen Auszugsstellungen. Hierdurch werden auch die Dichtungsstellen für den Stangenaustritt am Gehäuse des Zylinders (3) geschützt. Die Schutzanordnung (2) besteht aus einem Schutzrohr (5) und einem Schutzdeckel (6). Das Schutzrohr (5) umgibt umfangseitig den Zylinder (3) und ist an diesem in geeigneter Weise längsbeweglich geführt. Hierfür können am unteren Rohrrand (27) ein oder mehrere Noppen (28) oder dergleichen Distanzelemente am Rohrmantel angeordnet sein, die am Außenmantel des Zylinders (3) anliegen. Das Schutzrohr (5) ist am oberen Rand (23) mit dem Schutzdeckel (6) verbunden, welcher seinerseits direkt an der Kolbenstange (4) befestigt ist. Der Schutzdeckel (6) und das Schutzrohr (5) können aus Kunststoff oder einem anderen geeigneten Material bestehen.

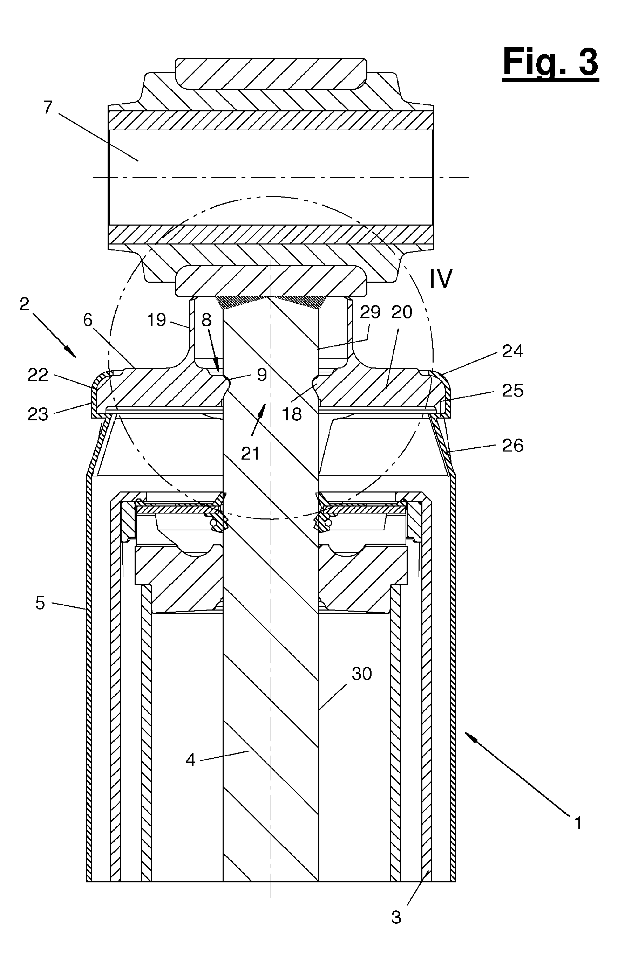

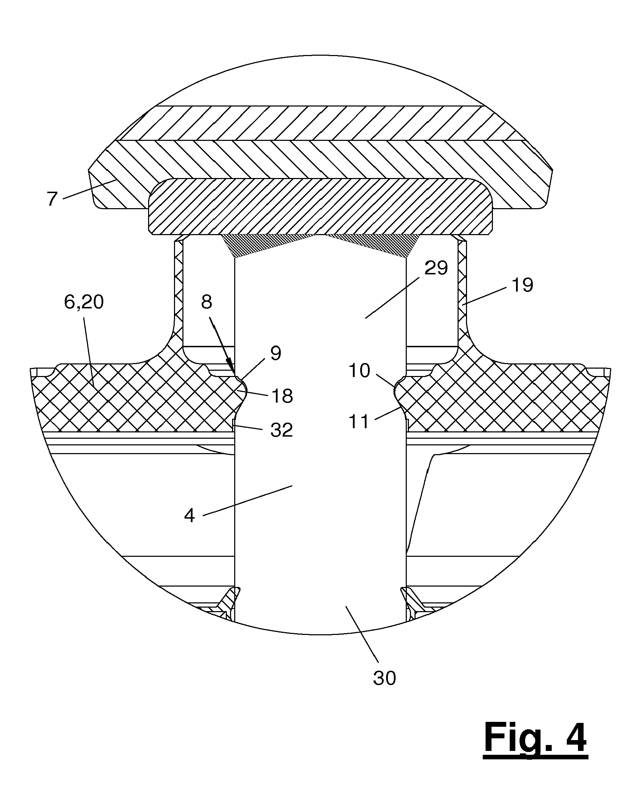

Wie Figur 3 und 4 verdeutlichen, ist der Schutzdeckel (6) mittels einer Klemmverbindung (8) direkt am Mantel der Kolbenstange (4) befestigt. Der Schutzdeckel (6) und die Kolbenstange (4) weisen formschlüssig ineinander greifende Verbindungselemente (9,18) auf. In der dargestellten Ausführungsform ist das Verbindungselement (9) als eine umfangseitige und quer zur Stangenachse ausgerichtete Nut an der Kolbenstange (4) ausgebildet. Die Nut (9) kann ringförmig und umlaufend sein. Sie kann alternativ aus mehreren einzelnen Vertiefungen am Stangenmantel bestehen, die in einem Ring, einer Schraubenlinie oder in anderer Weise verteilt am Stangenmantel angeordnet sein können.

Das Verbindungselement (18) des Schutzdeckels (6) ist als radial vorspringende Nase ausgebildet. Diese Nase (18) kann ebenfalls ringförmig umlaufend ausgebildet und angeordnet sein. Die Nasenform ist an die Nutenausbildung angepasst und kann dementsprechend auch aus mehreren verteilt angeordneten Einzelnasen bestehen. Die ineinander greifenden Verbindungselemente (9,18) können sowohl eine Rastfunktion als auch eine Dichtungsfunktion haben.

Alternativ oder zusätzlich können weitere Dichtungselemente vorhanden sein. In Abwandlung der gezeigten Ausführungsform kann die Zuordnung der Verbindungselemente (9,18) auch umgekehrt sein, wobei die Nut sich am Schutzdeckel (6) und die Nase an der Kolbenstange (4) befindet. Die nachfolgenden Erläuterungen für die Klemmverbindung (8) gelten in entsprechender Anpassung auch für diese Variante.

Wie Figur 3 verdeutlicht, ist die Nut (9) vom freien Kolbenstangenende und vom Lagerauge (7) axial distanziert. Der Kolbenstangenbereich (29) zwischen der Nut (9) bzw. der Deckelbefestigungsstelle und dem Lagerauge (7) kann lackiert sein. Eine Lackierung kann auch außenseitig am Lagerauge (7) angebracht sein. Statt einer Lackierung kann eine andere geeignete und z.B. korrosionsfeste Beschichtung aus Pulver oder dergleichen vorhanden sein. Der Kolbenstangenbereich (30) unterhalb der Nut (9) oder der Deckelbefestigungsstelle kann an die Dichtungs-, Gleit- und Führungserfordernisse im Zylinderbetrieb angepasst sein. Der Bereich (30) kann unlackiert sein. Er kann eine für die genannten Zwecke vorteilhafte Oberflächenbeschaffenheit besitzen und z.B. verchromt sein.

Die Nut (9) kann eine mehrfache Funktion haben und kann auch zur Kennlinienkontrolle genutzt werden. Die Nut (9) kann ggf. auch mit der Zylinderdichtung am oberen Zylinderende zusammenwirken. Die Lackierung kann vor der Deckelmontage erfolgen, wobei die Kolbenstange (4) so weit in den Zylinder (3) eingeschoben wird, bis die Nut (9) sich im Bereich der Zylinderdichtung oder einer eventuellen temporären Abdeckung befindet. Mittels einer temporären Verbindung am unteren Stangenende kann die Kolbenstange (4) in der Einfahrstellung während des Herstellungsprozesses fixiert werden. Dies kann z.B. durch eine zerstörbare Presspassung zwischen einer axialen Sacklochbohrung im Stangenende und einer Ventilschraube am Zylinderboden geschehen.

Wie Figur 3 und 4 verdeutlichen, besteht der Schutzdeckel (6) aus einer z.B. scheibenförmigen Deckelplatte (20), die in der Draufsicht eine Kreisform und mittig eine Durchgangsöffnung (21) für die Kolbenstange (4) aufweist, die konzentrisch zur Mittelachse der Kolbenstange (4) angeordnet sind. An der Deckeloberseite kann ein ringförmiger, hochstehender Kragen (19) angeordnet sein, der sich zum Lagerauge (7) erstreckt und dort ggf. dichtend anliegt. Der obere Kragenrand ist entsprechend der Lageraugenkontur geformt. Die radial vorspringende Nase (18) ist im Bereich der Durchgangsöffnung (21) angeordnet.

Wie Figur 4 im vergrößerten Schnitt verdeutlicht, können die Nut (9) und die Nase (18) eine im Querschnitt asymmetrische Form haben. Die Nut (9) kann einen gerundeten Nutengrund (10) besitzen, der an der zum Lagerauge (7) hin gelegenen Oberseite kreisbogenartig ausgebildet ist und relativ steil in die Manteloberfläche übergeht. Am unteren Ende läuft der Nutengrund (10) in eine schräge und weniger steile Flanke (11) zur Manteloberfläche aus.

Die Deckelplatte (20) ist etwas breiter als der Nutenbereich an der Kolbenstange (4). Die radial vorspringende Nase (18) hat eine an die Nutenform angepasste Querschnittsgestalt und besitzt ebenfalls einen kreisbogenartig gerundeten Nasenvorsprung und eine mit der schrägen Flanke (11) korrespondierende Nasenwand. Diese geht am unteren Ende in eine ringförmige Ausnehmung (32) über, an der die Deckelplatte (20) vom Kolbenstangenmantel distanziert ist. Bei einem radial Anpressen der Deckelplatte (20) haben die schrägen Flanken (11) eine Leitfunktion und drücken den Nasenvorsprung in den Nutengrund (10), wobei die ggf. aus einem weichen und kompressiblen Material bestehende Nase (18) etwas verformt wird und dichtend sowie rastend und klemmend in der Nut (9) zum Eingriff kommt.

Wie Figur 3 verdeutlicht, kann der Schutzdeckel (6) umfangseitig vom Schutzrohr (5) umgeben und im Schutzrohr (5) eingespannt sein. Der Schutzdeckel (6) kann im Durchmesser größer als das Lagerauge (7) sein, so dass das ebenfalls größere Schutzrohr (5) von oben her über das Lagerauge (7) auf den Schutzdeckel (6) aufgesetzt und an dessen Deckelrand (22) aufgepresst werden kann. Der umfangseitige Deckelrand (22) kann eine gerundete Form und an der Unterseite einen ringförmig umlaufenden Bund aufweisen.

Das Schutzrohr (5) besitzt an seinem oberen Rand (23) einen schrägen und die Rohröffnung konisch verjüngenden Wandabschnitt (26), der am oberen Ende in einen radial nach außen springenden Ansatz (25) übergeht, an dessen äußerem Ende sich wiederum eine hochragende und am oberen Ende gebogene Schulter (24) anschließt. Beim Aufschieben gleitet das elastische Schutzrohr (5) mit der schrägen Wand (26) über den gerundeten Deckelrand (22), wodurch der Rohrmantel elastisch geweitet wird und nach Überfahren des Deckelrands (22) mit dem Ansatz (25) unter den Bund am Deckelrand (22) schnappt. Die gebogene und der Deckelrandform angepasste Schulter (24) legt sich ihrerseits formschlüssig über die Außenkontur des Deckelrands (22). Hierdurch entsteht eine dichte Klemmverbindung, mit der die Deckelplatte (20) und die Klemmverbindung (8) radial eingespannt und fixiert werden. Das Schutzrohr (5) ist seinerseits um die Schulter (24) und den Ansatz (25) in Axialrichtung formschlüssig am Schutzdeckel (6) festgelegt bzw. eingespannt und wird bei den Kolbenstangenbewegungen mitgenommen.

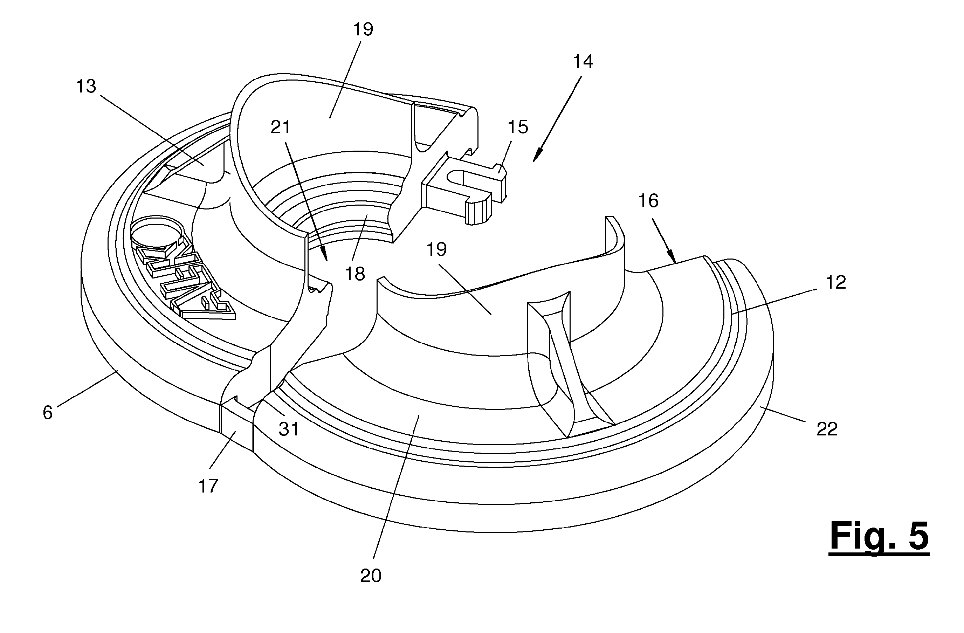

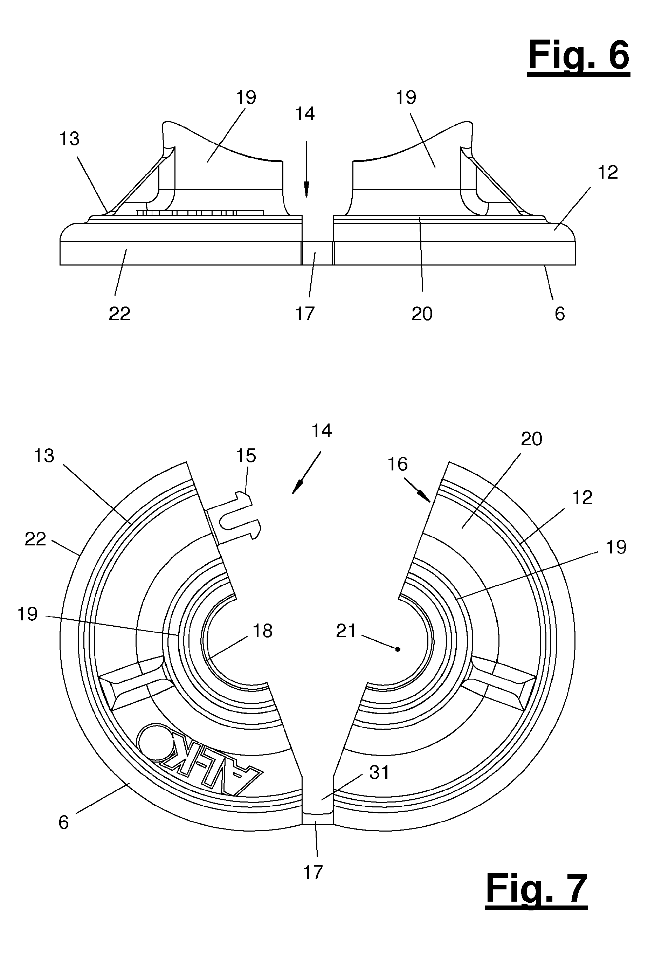

Figur 5 bis 7 verdeutlichen eine bevorzugte Ausführungsform des Schutzdeckels (6), der hier geteilt ausgebildet ist. Die Teilungsebene erstreckt sich längs der Kolbenstangenachse. Der Schutzdeckel (6) besteht aus zwei oder mehr Deckelteilen (12,13), die eine zur Montage lösbare Verbindung (14) aufweisen, die ggf. danach wieder geschlossen werden kann. In Figur 5 bis 7 ist der Schutzdeckel (6) in geöffneter Stellung dargestellt, in der er mit seiner Deckelöffnung seitlich über die Kolbenstange (4) geschoben und durch Schließen der Verbindung (14) an der Kolbenstange (4) befestigt werden kann. Durch die Teilung können die Ringform des Schutzdeckels (6) und die Durchgangsöffnung (21) für die Kolbenstange (4) geöffnet werden, wobei die zwei oder mehr Deckelteile (12,13) unter Bildung einer seitlichen Zugangsöffnung für die Kolbenstange (4) voneinander distanzierbar sind. Die Deckelteile (12,13) können stellenweise dauerhaft miteinander verbunden sein, z.B. in Scharnierform und aufgeklappt werden. Sie hängen dabei in Öffnungsstellung zusammen. Sie können alternativ zur Montage völlig voneinander getrennt und dann um die Kolbenstange (4) zusammen gesteckt und gegenseitig mit einer ggf. mehrfachen Verbindung (14) fixiert werden.

Der Schutzdeckel (6) ist z.B. mittig geteilt, wobei die zwei oder mehr Deckelteile oder Deckelhälften (12,13) an einer Stelle, z.B. am einen Ende über einen Verbindungssteg (17) noch stofflich miteinander verbunden sind. Dies ermöglicht eine einstückige Herstellung des Kunststoffdeckels, z.B. im Spritzgussverfahren. An einer anderen Stelle, z.B. am anderen Ende befindet sich die lösbare Verbindung (14). Der Verbindungssteg (17) kann verformbar oder beweglich sein. Er kann z.B. als Scharnier oder Gelenk, insbesondere als Filmscharnier ausgebildet sein, wobei im Nachbarschaftsbereich die Deckelteile (12,13) eine von der Trennlinie zurückspringende Randausnehmung (31) aufweisen. Die Randausnehmungen (31) bilden in Deckelschließstellung einen Zwickel zur Aufnahme des Verbindungsstegs (17), wobei die Deckelteile (12,13) in den restlichen Bereichen entlang der Trennlinie dicht aneinander anschließen.

Die Verbindung (14) kann als Rastverbindung ausgebildet sein. Hierfür weisen die Deckelteile (12,13) zusammenwirkende Rastelemente (15,16) auf. Beispielsweise kann am einen Deckelteil (12) ein vorspringender Rasthaken (15) angeordnet sein, der in Schließstellung in eine gegenüberliegende Rastöffnung (16) am anderen Deckelteil (13) greift. Die Rastöffnung (16) ist in den Zeichnungen nicht dargestellt.

Abwandlungen der gezeigten und beschriebenen Ausführungsformen sind in verschiedener Weise möglich. Die Klemmverbindung (8) kann in der vorerwähnten Weise umgestaltet bzw. umgekehrt werden. Gleiches gilt für die Rastverbindung (14). Der Schutzdeckel (6) kann einteilig ausgebildet sein und aus einem elastischen Material bestehen. Er kann auch aus mehr als zwei Deckelteilen (12,13) bestehen. Die geteilte Ausführung hat den Vorteil, dass der Schutzdeckel (6) jederzeit an der Kolbenstange (4) montiert werden kann. Dies kann auch nach Fertigstellung des Zylinders (3) geschehen. Eine Schutzanordnung (22) kann ggf. auch an bestehenden Zylinderanordnungen (1) nachgerüstet werden. Ferner kann auf den Kragen (19) verzichtet werden. Auch die Querschnittsform der Verbindungselemente (9,18) kann variieren. In weiterer Abwandlung kann in eine Nut an der Kolbenstange zunächst ein Dichtring eingelegt werden, der radial nach außen vorsteht und der von einer entsprechenden Nut am Rand der Durchgangsbohrung (21) des Schutzdeckels (6) aufgenommen wird. Auch die Verbindung zwischen Schutzrohr (5) und Schutzdeckel (6) kann variieren. Gleiches gilt für die Ausbildung des Schutzrohres (5) und seiner Anordnung bzw. Führung gegenüber dem Zylinder (3). Desgleichen kann die Zylinderanordnung (1) in anderer Weise ausgebildet sein und anderen Zwecken dienen.

### BEZUGSZEICHENLISTE

- 1: Zylinderanordnung, Stoßdämpfer
- 2: Schutzanordnung
- 3: Zylinder
- 4: Kolbenstange
- 5: Schutzrohr
- 6: Schutzdeckel
- 7: Lagerauge
- 8: Klemmverbindung
- 9: Verbindungselement, Nut
- 10: Nutgrund
- 11: Flanke
- 12: Deckelteil
- 13: Deckelteil
- 14: Verbindung, Rastverbindung
- 15: Rastelement, Rasthaken
- 16: Rastelement, Rastöffnung
- 17: Verbindungssteg
- 18: Verbindungselement, Nase
- 19: Kragen
- 20: Deckelplatte
- 21: Durchgangsöffnung
- 22: Deckelrand
- 23: Rohrrand oben
- 24: Schulter
- 25: Ansatz
- 26: schräger Wandabschnitt
- 27: Rohrrand unten
- 28: Noppe
- 29: oberer Bereich Kolbenstange
- 30: unterer Bereich Kolbenstange
- 31: Randausnehmung, Zwickel
- 32: Ausnehmung

## Patentansprüche

1. Zylinderanordnung, insbesondere Stoßdämpfer, mit einer Kolbenstange (4), einem Schutzrohr (5) und einem damit verbundenen Schutzdeckel (6), **dadurch gekennzeichnet, dass** der Schutzdeckel (6) direkt am Mantel der Kolbenstange (4) befestigt ist.

2. Zylinderanordnung nach Anspruch 1, **dadurch gekennzeichnet, dass** der Schutzdeckel (6) mittels einer Klemmverbindung (8) am Mantel der Kolbenstange (4) befestigbar ist, wobei der Schutzdeckel (6) und die Kolbenstange (4) formschlüssig ineinander greifende Verbindungselemente (9,18) aufweisen.

3. Zylinderanordnung nach Anspruch 1 oder 2, **dadurch gekennzeichnet, dass** das Verbindungselement (9) an der Kolbenstange (4) als umfangseitige Nut und das Verbindungselement (18) des Schutzdeckels (6) als radial vorspringende Nase ausgebildet ist.

4. Zylinderanordnung nach Anspruch 1, 2 oder 3, **dadurch gekennzeichnet, dass** die Nut (9) und die Nase (18) ringförmig ausgebildet sind.

5. Zylinderanordnung nach einem der vorhergehenden Ansprüche, **dadurch gekennzeichnet, dass** die Nut (9) und die Nase (18) im Querschnitt eine asymmetrische Form aufweisen.

6. Zylinderanordnung nach einem der vorhergehenden Ansprüche, **dadurch gekennzeichnet, dass** der Schutzdeckel (6) umfangseitig vom Schutzrohr (5) umgeben und eingespannt ist.

7. Zylinderanordnung nach einem der vorhergehenden Ansprüche, **dadurch gekennzeichnet, dass** der Schutzdeckel (6) geteilt (12,13) ausgebildet ist, wobei die zwei oder mehr Deckelteile (12,13) unter Bildung einer seitlichen Zugangsöffnung für die Kolbenstange (4) voneinander distanzierbar sind.

8. Zylinderanordnung nach einem der vorhergehenden Ansprüche, **dadurch gekennzeichnet, dass** Deckelteile (12,13) eines geteilten Schutzdeckels (6) eine zur Montage lösbare Verbindung (14) aufweisen.

9. Zylinderanordnung nach einem der vorhergehenden Ansprüche, **dadurch gekennzeichnet, dass** die Verbindung (14) als Rastverbindung ausgebildet ist.

10. Zylinderanordnung nach einem der vorhergehenden Ansprüche, **dadurch gekennzeichnet, dass** die Deckelteile (12,13) stellenweise scharnierartig miteinander verbunden sind.

11. Zylinderanordnung nach einem der vorhergehenden Ansprüche, **dadurch gekennzeichnet, dass** die Deckelteile (12,13) an einer Stelle einen verformbaren oder beweglichen Verbindungssteg (17) und an einer anderen Stelle eine zur Montage lösbare Verbindung (14) aufweisen.

12. Zylinderanordnung nach einem der vorhergehenden Ansprüche, **dadurch gekennzeichnet, dass** der Schutzdeckel (6) eine Deckelplatte (20) mit einer Durchgangsöffnung (21) für die Kolbenstange (4) aufweist.

13. Zylinderanordnung nach einem der vorhergehenden Ansprüche, **dadurch gekennzeichnet, dass** die kreisförmige Deckelplatte (20) außenseitig vom Rohrrand (23) umgriffen ist.

14. Zylinderanordnung nach einem der vorhergehenden Ansprüche, **dadurch gekennzeichnet, dass** der Schutzdeckel (6) an der Oberseite einen abstehenden Kragen (19) aufweist.

15. Zylinderanordnung nach einem der vorhergehenden Ansprüche, **dadurch gekennzeichnet, dass** der Kragen (19) an einem Lagerauge (7) der Kolbenstange (4) dicht anschließt.
